# NEUE EUROPÄISCHE PATENTSCHRIFT

(11) **EP 0 201 736 B2**
(45) Veröffentlichungstag und Bekanntmachung des Hinweises auf die Entscheidung über den Einspruch: **19.01.1994**
(45) Hinweis auf die Patenterteilung: 10.10.1990
(21) Anmeldenummer: 86105047.4
(22) Anmeldetag: 12.04.1986
(51) Int. Cl.: A01C 15/04

(54) **Vorrichtung zum Streuen von Dünger**
Device for the distribution of fertilizer
Dispositif pour distribuer de l'engrais

(30) Priorität: 17.04.1985 DE 3513739; 17.04.1985 DE 3513737
(43) Veröffentlichungstag der Anmeldung: 20.11.1986
(73) Patentinhaber: Rauch Landmaschinenfabrik GmbH, D-76545 Sinzheim (DE)
(72) Erfinder: Rauch, Norbert, Dipl.-Ing., D-7573 Sinzheim (DE)
(74) Vertreter: Dipl.-Ing. Heiner Lichti Dipl.-Phys. Dr.rer.nat. Jost Lempert Dipl.-Ing. Hartmut Lasch

(56) Entgegenhaltungen:
- EP-A- 0 074 254
- DD-A- 121 588
- DE-A- 2 425 091
- DE-A- 2 812 732
- DE-A- 3 303 356
- DE-A- 3 325 430
- DE-U- 1 763 202
- DE-U- 8 408 078
- FR-A- 2 382 171
- US-A- 3 871 587
- US-A- 3 911 650
- MTZ MOTORTECHNISCHE ZEITSCHRIFT, Band 38, November 1977, Nr. 11, Seiten 542-545, Stuttgart; "Neue Fahrzeugmotoren mit Abgasturboladern auf der IAA 77"
- Prospekt: Nordsten Air-o-matic

## Beschreibung

Die Erfindung betrifft eine Vorrichtung mit den Merkmalen des Oberbegriffs des Anspruchs 1.

Vorrichtungen dieser Art, die - im Gegensatz zu Schleuderstreuern - auch als Gebläsestreuer bezeichnet werden, werden insbesondere zum großflächigen Streuen von Dünger oder ähnlichen schüttgutartigen landwirtschaftlichen Produkten verwendet. Sie können mit großen Arbeitsbreiten bis zu 18 m und mehr eingesetzt werden. Bei kleineren bis mittleren Arbeitsbreiten ist das komplette Streuaggregat als Baueinheit beispielsweise an das Dreipunktgestänge eines Schleppers angekuppelt (DE-A-33 25 430), während bei größeren Arbeitsbreiten, die zugleich größere Vorratsbehälter erfordern, dieser von dem Streuaggregat getrennt und auf dem Fahrzeug unmittelbar aufgesattelt wird, während alle übrigen Bauteile des Streuaggregates am Dreipunktgestänge des Schleppers angekuppelt werden (DE-C-34 29 042.7). Statt dessen ist es auch möglich, das gesamte Streuaggregat mit großvolumigem Vorratsbehälter auf einem Anhänger anzuordnen (FR-A-77 06 437).

Bei allen bekannten Gebläsestreuern, ob im aufgesattelten oder mitlaufenden Betrieb, wird das Gebläse von der Zapfwelle des Fahrzeugs angetrieben. Zu diesem Zweck muß an die Zapfwelle eine Gelenkwelle angekuppelt werden, von der aus das Gebläse über einen Riemenantrieb oder dergleichen angetrieben wird. Soll das Streuaggregat auch für die Spätdüngung eingesetzt werden, so erfordert dies eine Weitwinkelgelenkwelle, um die Höhendifferenz des Streuaggregates zwischen der Stellung für die Normaldüngung und der angehobenen Stellung für die Spätdüngung zu überwinden. Dadurch wird die gesamte Getriebekette zwischen Zapfwelle und Gebläse aufwendig und schwer. In der Regel muß auch noch ein Freilauf vorgesehen werden, damit bei stehender Zapfwelle das Gebläse mit einer großen Schwungmasse auseaufen kann. Allgemein wird von Gebläsestreuern dieser Art eine maximale Nutzlast an Dünger sowie andererseits - vor allem bei aufgesattelten Geräten - eine kurze Bauweise gefordert, damit die Lenkfähigkeit und Geländegängigkeit des Fahrzeugs nicht durch einen zu weit hinten liegenden Schwerpunkt des Streuaggregates leiden. Diese Forderungen erzwingen eine kürzestmögliche Bauweise und führen folglich zu außerordentlich beengten Platzverhältnissen, so daß das Ankuppeln des Streuaggregates sowie die Inspektion und Wartung der Bauteile der Getriebekette umständlich und zeitraubend ist. Soweit das Gebläse unterhalb des dachförmigen Bodens angeordnet ist (DE-A-33 25 430) muß der Vorratsbehälter entsprechend ausgepart werden, so daß Nutzlast verloren geht, oder aber der Behälter höher gesetzt werden, was wiederum zu einer ungünstig hohen Schwerpunktlage führt.

Der Erfindung liegt die Aufgabe zugrunde, den Bau- und Wartungsaufwand bei Vorrichtungen, mit am Dreipunktgestänge aufgenommenen streuaggregat, zu verringern und durch Gewichtsreduzierung die Möglichkeit einer Vergrößerung der Nutzlast zu schaffen.

Diese Aufgabe wird mit den kennzeichnenden Merkmalen des Anspruchs 1 gelöst.

Hydraulikantriebe zeichnen sich bekanntermaßen durch geringeren Bauaufwand bei geringem Gewicht aus. Es entfallen alle Bauteile der üblichen Getriebekette zwischen Zapfwelle und Achse des Gebläsesläufers. Dadurch läßt sich das Gewicht erheblich reduzieren. Wartungsintensive Teile, wie Wellenlager, Keilriemen etc. sowie die damit einhergehenden Störquellen sind beseitigt. Der Platzbedarf eines Hydraulikmotors ist gegenüber dem herkömmlichen Antrieb wesentlich geringer, so daß der eingesparte Platz zur Erhöhung der Nutzlast zur Verfügung steht. Das umständliche Ankuppeln an die Zapfwelle entfällt. Es muß lediglich für eine Verbindung zwischen dem Hydraulikmotor und der Hydraulikanlage des Schleppers gesorgt werden, die - da nicht ortsgebunden - weniger umständlich hergestellt werden kann. Die Beweglichkeit des Streuaggregates relativ zum Fahrzeug wird aufgrund fehlender Wellenverbindungen in keiner Weise behindert, so daß auch ein hohes Anheben für die Spätdüngung möglich ist. Dies setzt lediglich eine entsprechend lange und flexible Hydraulikleitung voraus. Mit der erfindungsgemäßen Ausbildung ergibt sich der weitere entscheidende Vorteil, daß das Gebläse nicht mehr in einer konstruktiv zwingend vorgegebenen Relation zum Zapfwellenantrieb, sondern an beliebiger Stelle angeordnet werden kann. Auch ist die Anordnung und Ausbildung des Gebläses nicht von der vorgegebenen Drehrichtung der Zapfwelle abhängig. Ferner ist eine einfache Regelung und Konstanthaltung der Drehzahl möglich, was bei einem Zapfwellenantrieb mit schwankender und in manchen Betriebszuständen zu niedriger Drehzahl nicht oder nur mit einem erheblichen Aufwand möglich ist.

Durch die weitere erfindungsgemäße der Anordnung des Gebläses quer zur Fahrtrichtung kann das Gebläse unterhalb des dachförmigen Bodens angeordnet sein, so daß dieser notwendige Totraum gut genutzt wird, ohne daß Volumen am Behälter verloren geht. Durch die lotrechte Achse ergibt sich eine flache, tiefliegende Bauweise unter dem dachförmigen Boden und der Vorteil, daß in der Baurichtung, d.h. in der Breite des Streuaggregates nur wenig Platz benötigt wird und die Platzersparnis zur Erhöhung der Nutzlast zur Verfügung steht.

Die Erfindung eröffnet weiterhin die Möglichkeit, daß das Gebläse zwei Druckstutzen mit je einem Luftverteiler für die Streuleitungen an jeder Seite bezogen auf die Fahrzeuglängsachse und die Drehachse des Gebläses aufweist. Bei der herkömmlichen Ausbildung sind aus Gründen der Platzersparnis und der strömungsgünstigen Luftführung zwei Druckstutzen und für wenigstens eine Seite eine lange Luftumlenkung notwendig. Dadurch können sich für die Streuleitungen an beiden Seiten wegen der verschiedenen Luftwege unterschiedliche Streuleistungen ergeben und ist der Platzbedarf entsprechend groß. Bei einer horizontalen Anordnung des Gebläses hingegen, wie sie die Erfindung gestattet, ergibt sich auch bei zwei Druckstutzen eine gleichmäßige Streuleistung auf beiden Seiten bei dennoch umgünstiger Unterbringung.

In bevorzugter Ausführung der Erfindung ist der Hydraulikmotor über eine Leitung an eine Hydraulikpumpe angeschlossen, die ihrerseits an die Zapfwelle angekuppelt ist. Diese Ausbildung ist insbesondere dann von Vorteil, wenn Fahrzeuge ohne Hydraulik-Arbeitskreis eingesetzt werden sollen oder aber die Leistungsaufnahme des Gebläses, insbesondere bei großen Streubreiten, größer ist als die Leistungsabgabe des bordeigenen Hydraulikkreises.

Bei dieser Ausführungsform ist der Hydraulikmotor vorteilhafterweise mit einer Rücksaugeinrichtung ausgestattet, die ein Auslaufen des Gebläseläufers bei stillstehender Zapfwelle gestattet. Ferner kann eine Regeleinrichtung zur Konstanthaltung der Drehzahl des Hydraulikmotors unabhängig von der Zapfwellen-Drehzahl vorgesehen sein.

Um eine weitere Gewichtsreduzierung zu ermöglichen und die notwendige Hydraulikleistung fürden Antrieb des Gebläses zu minimieren, besteht der Gebläseläufer vorzugsweise aus Kunststoff.

Zweckmäßigerweise ist für die Gebläse für die Streuleitungen ein Drehzahlmesser vorgesehen und auf dem Fahrzeug ein Drehzahlinstrument angeordnet. Dies ist insbesondere bei regelbarer Drehzahl des Hydraulikmotors, beispielsweise zur Anpassung der Gebläseleistung an unterschiedliche Streubreiten von Vorteil. Ferner kann auf dem Fahrzeug ein Druckanzeigeinstrument als Kontrollgerät und hinter der Hydraulikpumpe ein Druckbegrenzungsventil als Drehzahlbegrenzung und Sicherheitseinrichtung angeordnet sein.

Nachstehend ist die Erfindung anhand von in der Zeichnung dargestellten Ausführungsbeispielen beschrieben. In der Zeichnung zeigen:
Figur 1 eine schematische Seitenansicht einer Ausführungsform der Vorrichtung nach dem Stand der Technik;
Figur 2 eine schematische Stirnansicht der Ausführungsform gemäß Figur 1;
Figur 3 eine schematische Draufsicht auf eine erste Ausführungsform der Vorrichtung gemäß der Erfindung und

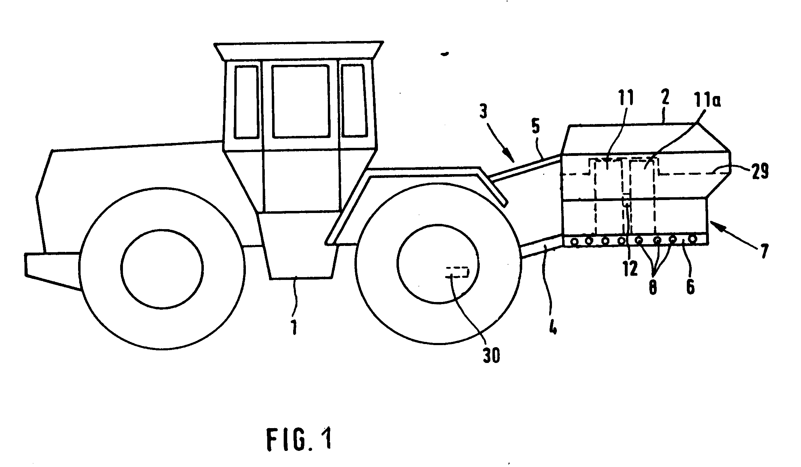

In Figur 1 ist ein Fahrzeug 1, z.B. ein Systemschlepper gezeigt, der ein Dreipunktgestänge 3 aus zwei Unterlenkern 4 und einem Oberlenker 5 aufweist, an dem der Rahmen 6 eines Streuaggregates 7 angekuppelt ist.

Das Streuaggregat 7 besteht in herkömmlicher Weise aus mehreren parallel nebeneinander angeordneten Streuleitungen 8, die sich von der Fahrzeuglängsachse aus in Bündeln nach außen erstrecken und in unterschiedlichem Abstand an nicht gezeigten Verteilerorganen ausmünden. Diese Verteilerorgane bestehen beispielsweise aus Pralltellern, die vor den nach hinten abgebogenen Öffnungen der Streuleitungen angeordnet sind.

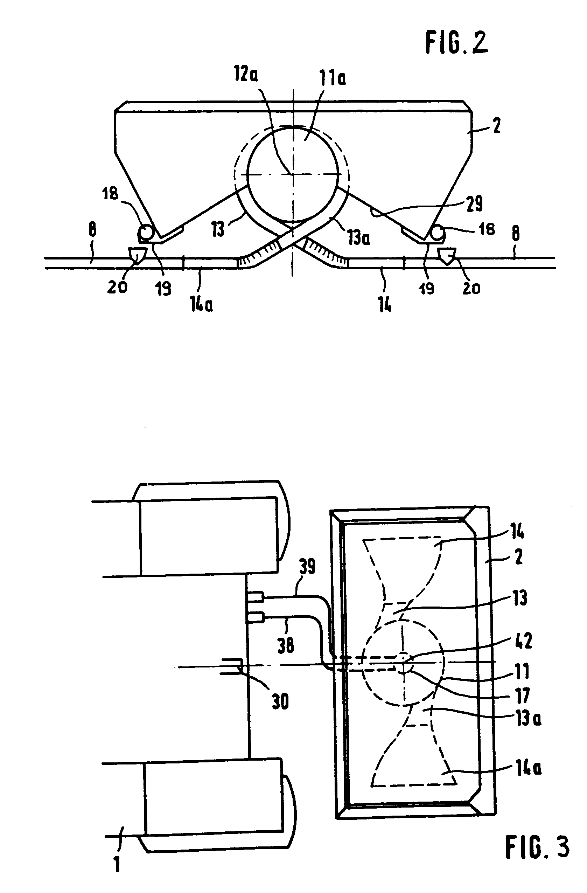

Das in Figur 1 und 2 gezeigte bekannte Streuaggregat weist zwei Gebläse 11, 11a auf, deren Achse 12 in Fahrtrichtung verläuft. Die Gebläse 11, 11a besitzen je einen Druckstutzen 13, 13a, die zu einem Luftverteiler 14, 14a führen, der sich über die gesamte Breite der Streuleitungen 8 an einer Fahrzeugseite erstreckt und die Luft auf die einzelnen Streuleitungen verteilt. Unmittelbar hinter den Luftverteilern 14, 14a setzen die Streuleitungen 8 mit je einem Injektor (nicht gezeigt) an. Die Streuleitungen 8 können um eine nicht gezeigte Achse nach oben in eine Transportstellung geklappt und zugleich zu kürzeren Paketen mit relativ geringer Höhe zusammengefaltet werden.

Der Vorratsbehälter 2 weist einen beiderseits der Fahrzeuglängsachse dachförmig abfallenden Boden 29 (Figur 2) und jeweils nahe der Seitenbegrenzung des Vorratsbehälters angeordnete Auslauföffnungen auf, in deren Bereich Dosierorgane 18 in Form von achsparallel angeordneten Nokkenrädern gelagert sind. Unterhalb der Dosierorgane 18 sind Dosierschalen 19 unter federnder Anlage an den Dosierorganen angeordnet, über die das dosierte Streugut in Auffangschalen 20 gelangt, die an den Injektoren der Streuleitungen 8 angeordnet sind.

Bei der in Figur 1 und 2 geeeigten bekannten Vorrichtung verläuft die Achse der Gebläse 11, 11a in Fahrtrichtung. Die notwendige Größe der Gebläse erfordert deshalb entsprechende Aussparungen im Bereich des Scheitels des dachförmigen Bodens 29, wodurch Behältervolumen und damit Nutzlast verloren geht. Ferner sind die Gebläse über eine nicht gezeigte Gelenkwelle an die Zapfwelle 30 des Schleppers 1 angekuppelt, die für den Antrieb der Gebläse sorgt.

Figur 3 zeigt ein Ausführungsbeispiel der erfindungsgemäßen Vorrichtung, bei dem der Läufer des Gebläses 11 (11a) quer zur Fahrtrichtung mit senkrecht stehender Achse 42, angeordnet ist, so daß der Gebläseläufer und das Gebläsegehäuse mit ihrer diametralen Abmessung in einer Horizontalebene liegen. Dabei kann das Gebläse an der tiefst möglichen Stelle des Streuaggregates angeordnet sein, so daß der dachförmige Boden so flach als es der Schüttwinkel des Streugutes erlaubt, verlaufen kann. An das Gebläsegehäuse sind an etwa gegenüberliegenden Stellen die Druckstutzen 13, 13a angesetzt, an die wiederum je ein Luftverteiler 14, 14a anschließt. Auf der Gebläseachse 42 sitzt ein Hydraulikmotor 17, der über eine Druckleitung 38 und eine Rücksaugleitung 39 unmittelbar mit dem hydraulischen Bordnetz des Fahrzeugs 1 verbunden ist. Statt dessen kann der Hydraulikmotor 42 auch von einer auf die Zapfwelle 30 aufgesetzten Hydraulikpumpe angetrieben werden.

## Patentansprüche

1. Vorrichtung zum flächigen Streuen von Dünger, bestehend aus einem Fahrzeug (1), z.B. einem Schlepper, mit einer Zapfwelle (30) und einem Dreipunktgestänge und einem von letzterem aufgenommenen Streuaggregat (7), das einen Vorratsbehälter (2) mit einem dachförmig zu Auslauföffnungen abfallenden Boden (29), unter den Auslauföffnungen angeordnete Dosierorgane (18) sowie mehrere an diese mit Einlauföffnungen (20) anschließende, zu beiden Seiten und senkrecht zu der Fahrzeuglängsachse sich erstreckende Streuleitungen (8) aufweist, wobei die Streuleitungen jeder Seite über je einen Luftverteiler (14, 14a) und einen Druckstutzen (13, 13a) an ein unter dem dachförmigen Boden (29) angeordnetes Gebläse angeschlossen sind und in unterschiedlichem Abstand von der Fahrzeuglängsachse an Streuöffnungen mit Verteilerorganen enden, dadurch gekennzeichnet, daß das Gebläse (11) eine lotrechte Achse (42) aufweist und quer zur Fahrtrichtung angeordnet und mittels eines unmittelbar auf der Achse (12) des Läufers des Gebläses (11) sitzenden Hydraulikmotors(17) angetrie- ben ist, und daß das Gebläse die Druckstutzen (13, 13a) und Luftverteiler (14, 14a) für die Streuleitungen an jeder Seite bezogen auf die Fahrzeuglängsachse und die Drehachse des Gebläses an gegenüberliegenden Stellen aufweist.

2. Vorrichtung nach Anspruch 1, dadurch gekennzeichnet, daß der Hydraulikmotor (17) über eine Leitung an eine Hydraulikpumpe (15) angeschlossen ist, die ihrerseits an die Zapfwelle (30) angekuppelt ist.

3. Vorrichtung nach Anspruche 1 oder 2, dadurch gekennzeichnet, daß der Hydraulikmotor (17) mit einer Rücksaugeinrichtung versehen ist.

4. Vorrichtung nach einem der Ansprüche 1 bis 3, gekennzeichnet durch eine Regeleinrichtung zur Konstanthaltung der Drehzahl des Hydraulikmotors (17).

5. Vorrichtung nach einem der Ansprüche 1 bis 4, dadurch gekennzeichnet, daß der Läufer des Gebläses (11) aus Kunststoff gebildet ist.

6. Vorrichtung nach einem der Ansprüche 1 bis 5, dadurch gekennzeichnet, daß für das bzw. die Gebläse (11, 11a) für die Streuleitungen (8) ein Drehzahlmesser vorgesehen und auf dem Fahrzeug (1) ein Drehzahlinstrument angeordnet ist.

7. Vorrichtung nach einem der Ansprüche 1 bis 6, dadurch gekennzeichnet, daß aufdem Fahrzeug (1) ein Druckanzeigeinstrument und hinter der Hydraulikpumpe (15) ein Druckbegrenzungsventil angeordnet ist.

## Claims

1. Device for the surface spreading of fertilizer, comprising a vehicle (1), e.g. a tractor, with a power take-off (30) and a three-point linkage and a spreading unit (7) received by the latter, which has a storage container (2) with a base (29) dropping away in roof-like manner towards outlet ports, dosing members (18) positioned below the outlet ports, as well as several spreading lines (8) connected to the dosing members (18) by intake ports (20) and which are arranged on either side and at right angles to the vehicle longitudinal axis, wherein the spreading lines on each side are connected via an air distributor (14,14a) and a pressure connection (13,13a) to one blower (11) positioned below the roof-like base (29) and which terminate at different distances from the vehicle longitudinal axis at spreading openings with distributing members (9), characterized in that the blower (11) has its shaft at a right angle and transversely to the direction of travel and is driven by a hydraulic motor (17) positioned directly on the shaft (12) of the rotor of the blower (11) and that the blower (11) has the pressure connections (13,13a) and the air distributors (14,14a) for the spreading lines on each side with reference to the vehicle longitudinal axis and the revolving shaft of the blower on opposite sides.

2. Device according to claim 1, characterized in that the hydraulic motor (17) is connected via a line (31,34) to a hydraulic pump (15), which is in turn coupled to the power take-off.

3. Device according to claims 1 or 2, characterized in that the hydraulic motor (17) is provided with a back-suction device.

4. Device according to one of the claims 1 to 3, characterized by a regulating device for keeping the speed of the hydraulic motor (17) constant.

5. Device according to one of the claims 1 to 4, characterized in that the rotor of the blower (11) is made from plastic.

6. Device according to one of the claims 1 to 5, characterized in that a tachometer is provided for the blower or blowers (11,11a) for the spreading lines (8) and a speed instrument is located on the vehicle (1).

7. Device according to one of the claims 1 to 6, characterized in that the vehicle (1) carries a pressure gauge and a pressure limiting valve is positioned behind the hydraulic pump (15).

## Revendications

1. Dispositif pour distribuer de l'engrais sur des surfaces étendues, comprenant un véhicule (1), par exemple un tracteur, avec une prise de force (30) et un attelage à trois points, et un groupe de distribution (7) accouplé audit véhicule et comportant un réservoir (2) avec un fond (29) descendant en forme de toit vers des ouvertures de sortie, des organes de dosage (18) disposés au-dessus des ouvertures de sortie ainsi qu'une pluralité de conduites de distribution (8) qui se raccordent à ces derniers avec des ouvertures d'entrée (20), s'étendent vers les deux cotés et perpendiculairement à l'axe longitudinal du véhicule, les conduites de distribution (8) à chaque côté étant par un diffuseur d'air (14,14a) et un tuyau de refoulement (13,13a) à une soufflante (11) disposée sous le fond (29) en forme de toit, lesquelles conduites de distribution se terminent, à des distances variables de l'axe longitudinal du véhicule, par des ouvertures de distribution munies d'organes distributeurs (9), caractérisé en ce que la soufflante (11) est disposée avec son axe orienté verticalement et transversalement à la direction de la marche et entraînée au moyen d'un moteur hydraulique (17) monté directement sur l'axe (12) du rotor de la soufflante (11) et en ce que la soufflante (11) comprend les tuyaux de refoulement (13,13a) et les diffuseurs d'air pour les conduites de distribution sur chaque côté relativement à l'axe longitudinal du véhicule et à l'axe tournent de la soufflante à des côtés opposés.

2. Dispositif selon la revendication 1, caractérisé en ce que le moteur hydraulique (17) est couplé, par l'intermédiaire d'une conduite (31,34), avec une pompe hydraulique (15) laquelle est accouplée à son tour à la prise de force (30).

3. Dispositif selon l'une des revendications 1 ou 2, caractérisé en ce que le moteur hydraulique (17) est muni d'un dispositif de recirculation.

4. Dispositif selon l'une des revendications 1 à 3, caractérisé en ce qu'il comprend un dispositif de réglage pour la stabilisation de la vitesse de rotation du moteur hydraulique (17).

5. Dispositif selon l'une des revendications 1 à 4, caractérisé en ce que le rotor de la soufflante (11) est réalisé en matière plastique.

6. Dispositif selon l'une des revendications 1 à 5, caractérisé en ce qu'un tachymètre est prévu pour la et respectivement les soufflante(s) (11,11a) pour les conduites de distribution (8) et qu'un compte-tours est monté sur le véhicule (1).

7. Dispositif selon l'une des revendications 1 à 6, caractérisé en ce qu'un indicateur de pression est monté sur le véhicule (1) et qu'un limiteur de pression est disposé en aval de la pompe hydraulique (15).
